# EUROPEAN PATENT APPLICATION

(11) **EP 1 312 967 A1**
(43) Date of publication of application: **21.05.2003**
(21) Application number: 02025285.4
(22) Date of filing: 12.11.2002
(51) Int. Cl.: G02B 26/08, G02B 27/09, F21V 7/16, F21V 7/22

(54) **Lighting reflection apparatus**

(30) Priority: 15.11.2001 JP 2001350581
(71) Applicant: DU PONT-TORAY COMPANY, LTD., Chuo-ku, Tokyo 103-0023 (JP); Tohoku Pioneer Corporation, Tendo-shi, Yamagata-ken 994-0012 (JP)
(72) Inventor: Tanno, Toshihiro, c/o Tohoku Pioneer Corporation, Tendo-shi, Yamagata-ken 994-0012 (JP); Machida, Hideaki, c/o Du Pont-Toray Co., Ltd., Tokyo 103-0023 (JP); Shibata, Shigeo, c/o Mogami Denki Corporation, Mogami-gun, Yamagata-ken 999-5312 (JP)
(74) Representative: Bohnenberger, Johannes, Dr.

(57) **Abstract**

A lighting reflection apparatus is provided, which improves controllability and sensitivity in changing or controlling an outgoing light characteristic. A reflector (10)is composed of a substrate (10a) made of a film-like polyimide molded item shaped by using only a difference between pressures applied from respective surfaces of a film-like item while subjecting the film-like item to plasticization with non-contact heating and having in itself a power of maintaining a three-dimensional shape independently or in the form of a single layer, and a reflection surface (10b) formed on an inner surface of the substrate (10a). Then, outgoing light is changed or controlled by causing elastic deformation in the reflector by pressing the reflector (10) with pressing means (30). Since the reflection surface of the reflector (10) is formed by complete non-contact method, it is so smooth that sensitivity in controlling the outgoing light can be improved. Also, since the reflector (10) made of an elastic film is deformed, satisfactory controllability can be attained.

## Description

### BACKGROUND OF THE INVENTION

The present invention relates to a lighting reflection apparatus equipped with a reflector which can undergo elastic deformation and is capable of changing or controlling an outgoing state of an irradiation light by causing elastic deformation in the reflector.

The present application claims priority from Japanese Application No. 2001-350581, the disclosure of which is incorporated herein for all purpose.

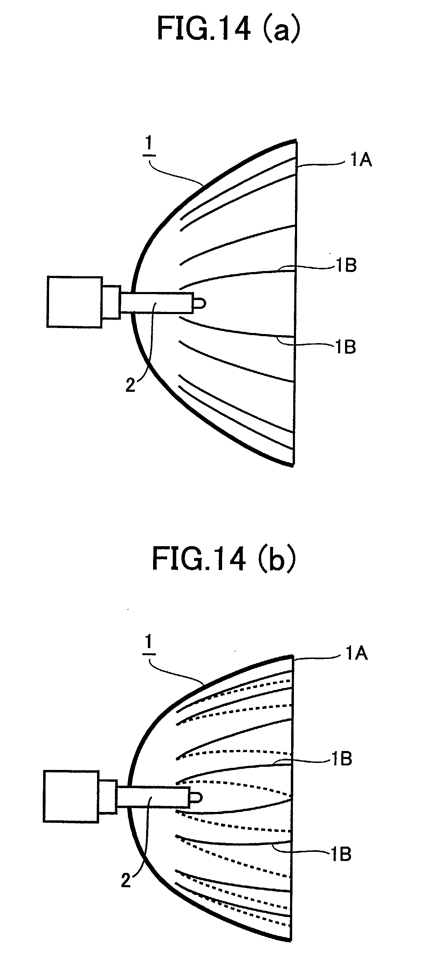

With regard to a lighting reflection apparatus equipped with a reflector for reflecting light emitted from a light source to a particular direction, there has been known a technique of changing various characteristics or an outgoing direction of an outgoing light by deforming or moving the reflection surface of the reflector. For example, Japanese National Publication No. Hei. 2-502686 and Japanese Patent Laid-Open No. Hei. 4-363804 describe a lighting reflection apparatus as shown in Fig. 14(a), which is equipped with a reflector 1 having a reflection surface of a concave curved surface formed with an outgoing opening 1A, so that light emitted from a light source 2 is reflected by the reflector 1 and goes out through the outgoing opening 1A, and in which a plurality of slits 1B are formed in the reflector 1 from the opening end to the center thereof, so that a part of the reflector 1 is divided strip-wise by the slits 1B. According to this arrangement, as shown in Fig. 14(b), by causing elastic deformation in the reflector 1 which changes a curvature of the reflection surface and reduces a diameter of the outgoing opening 1A, it is possible to change a beam spot or a light distribution state of lighting light going out through the outgoing opening 1A.

The conventional lighting reflection apparatus as described above uses metal, such as aluminum, as a material of a substrate, which is subjected to processing to form a reflector having a reflection surface of a concave curved surface, which is further subjected to cutting processing to form elastic deformation portions in the form of slits or the like. This arrangement has a problem that high productivity cannot be achieved because processing of the substrate is time-consuming. Meanwhile, this arrangement uses a lightweight material, such as aluminum. However, since a metal material (even if it is aluminum) is used in forming the reflector, there is a limit in weight abatement.

Further, when a reflector substrate made of a metal material, such as aluminum, undergoes an elastic deformation, it cannot achieve high elastic restorability, which not only results in poor response in changing or controlling the outgoing state, but also raises a problem in durability over repetitive use. On the other hand, although a steel product or the like having a high elastic restorability may be used, a larger operation force will be needed in changing or controlling the outgoing state, which in turn demands the use of high-strength operating members, thereby raising a problem that an overall reflection apparatus will naturally increase its size and weight.

Further, there has been proposed an idea of forming a lightweight film reflector substrate by subjecting a polyimide film having a heat-resistance, a self-digesting property, and an excellent kinetic property to a die forming process (Japanese Patent Laid-Open No. Hei 11-273431). According to this proposal, weight saving and an improvement of the productivity of the reflector can be achieved. However, since the concave surface which serves as the reflection surface is formed by die molding process, fine irregularities of the die will be transferred onto the surface of the molded item, and rubbing with the die leaves a scratch on the molded item, which makes it impossible to form a smooth reflection surface. Hence, with the reflector as described above, light scattered from the reflection surface will increase, and therefore, outgoing light with high directivity cannot be obtained. As a result, the light reflection characteristic cannot be controlled precisely by deforming or moving the reflection surface, which poses a problem that the outgoing light characteristic can neither be changed nor controlled with a high sensitivity.

### SUMMARY OF THE INVENTION

The present invention is proposed to solve these problems, and therefore, has an object to provide a lighting reflection apparatus for changing or controlling an outgoing state of an irradiating light by causing elastic deformation in a reflector, which can achieve an improvement of the productivity and weight saving by using a film reflector substrate. Another object of the invention is to provide a lighting reflection apparatus which can attain quick response in changing or controlling the outgoing light characteristic by using a reflector that readily undergoes elastic deformation with high restorability. Still another object of the invention is to provide a lighting reflection apparatus which can change or control the outgoing light characteristic with high sensitivity.

In order to achieve the above and other objects, a lighting reflection apparatus according to each aspect of the present invention is characterized as follows.

A first aspect of the invention provides a lighting reflection apparatus for reflecting light emitted from a light source to a particular direction, including: a reflector composed of a substrate made of a film-like polyimide molded item shaped by curve formation using only a difference between pressures applied to respective surfaces of a film-like item while subjecting the film-like item to plasticization with non-contact heating and having in itself a power of maintaining a three-dimensional shape independently or in a form of a single layer, and a reflection surface formed on a concave curved surface of the substrate; and pressing means for causing elastic deformation on the reflection surface of the reflector.

A second aspect of the invention is based on the lighting reflection apparatus according to the first aspect, wherein the pressing means presses a circular outgoing opening of the reflector from above and beneath or from right and left to deform the circular outgoing opening longitudinally or laterally.

A third aspect of the invention is based on the lighting reflection apparatus according to the first aspect, wherein the pressing means presses a back surface of the reflector partially to form a local convex curved surface in at least one place on the reflection surface.

A fourth aspect of the invention provides a lighting reflection apparatus for reflecting light emitted from a light source to a particular direction, including a reflector composed of a substrate made of a film-like polyimide molded item shaped by curve formation using only a difference between pressures applied to respective surfaces of a film-like item while subjecting the film-like item to plasticization with non-contact heating and having in itself a power of maintaining a three-dimensional shape independently or in a form of a single layer, and a reflection surface formed on a concave curved surface of the substrate, the reflector having an elastic deformation portion in a form of one or both of a folding and a cut formed in at least a part of the reflector.

A fifth aspect of the invention is based on the lighting reflection apparatus according to any of the first through fourth aspects, wherein the substrate is made of heat-resistant aromatic polyimide which does not undergo plastic deformation at or above 200°C and has a thickness ranging from 8 to 200 µm.

According to the respective aspects of the invention as described above, operations as follows can be achieved.

The lighting reflection apparatus according to the first aspect uses a film-like polyimide molded item, which in itself has a power of holding a three-dimensional shape independently or in the form of a single layer, as the substrate of the reflector. Hence, it is possible to provide a lighting reflection apparatus having excellent productivity because processing, such as cutting and folding, can be performed easily, and being easy to handle during fabrication because of its lightweight. Also, the film-like polyimide molded item having a power of holding a three-dimensional shape independently or in the form of a single layer not only has high elastic restorability, but also is able to undergo elastic deformation easily; moreover, it has high flexibility. Hence, it excels in controllability, in particular, quickness in response, in changing or controlling the outgoing state of lighting light by deforming or moving the reflection surface, and is also able to change the reflection surface in various curved surface shapes depending on the required outgoing light characteristics of lighting light. Consequently, the film-like polyimide molded item can be used in a wide range of applications; meanwhile, it is possible to meet the demands for complicated changes in characteristics by a single reflector.

Also, since the reflection surface of the reflector is formed on the substrate shaped by curve formation using only a difference between pressures applied to the respective surfaces of the film while subjecting the film to plasticization with non-contact heating, it is formed as a smooth reflection surface having neither fine irregularities nor a scratch, which makes it possible to obtain reflection light with high directivity causing less scattering. By causing elastic deformation in the reflector which can control the light reflection characteristic precisely by the pressing means, it is possible to change or control the characteristic of outgoing light with high sensitivity.

The lighting reflection apparatus according to the second aspect causes elastic deformation in the shape of the outgoing opening of the reflector and on the curved surface of the reflector by providing the pressing means for the reflector having the circular outgoing opening to press the circular outgoing opening from above and beneath or from right and left. According to this arrangement, in addition to the aforementioned operation, elastic deformation is caused in the entire reflector without applying processing, such as cutting, to the reflector. Hence, no processing is necessary after the reflector is shaped by curve formation, thereby making it possible to achieve quite high productivity. Also, by deforming the shape of the outgoing opening considerably in the longitudinal or lateral direction, it is possible to significantly change the shape of a beam and the light distribution characteristic of outgoing light.

The light reflection apparatus according to the third aspect causes deformation on the reflection surface to change the curved state more complicatedly by having a reflector made of a film-like polyimide molded item which is highly flexible and readily undergoes deformation, and forming a local convex curved surface in at least one place on the reflection surface by pressing the back surface of the reflector partially. According to this arrangement, in addition to the aforementioned operations, it is possible to change or control the outgoing light characteristic in detail and in various manners to meet the complicated demands for a wide range of applications by a single reflector.

The pressing means in the first through third aspects include, besides mechanical means for causing elastic deformation on the reflection surface, means for deforming the reflection surface by electrostatically or magnetically, by an air pressure, etc.

The lighting reflection apparatus according to the fourth aspect, as with the first aspect, uses a film-like polyimide molded item, which in itself has a power of holding a three-dimensional shape independently or in the form of a single layer, as the substrate of the reflector. Hence, processing by folding or cutting can be readily performed, which makes it easy to form the elastic deformation portion which undergoes partial deformation in the reflector. Also, since the elastic deformation portion is formed in a film-like polyimide molded item having high elastic restorability, excellent controllability can be demonstrated in changing or controlling the outgoing state of lighting light. Also, the reflector composed of the substrate made of the polyimide film shaped by curve formation using only a difference between pressures applied to the respective surfaces of the film while subjecting the film to plasticization with non-contact heating, has a smooth reflection surface with no fine irregularities or the like. Hence, it is possible to obtain reflection light having high directivity causing less scattering. By providing the elastic deformation portion in the form of one or both of a folding and a cut in at least a part of the reflector which can control the light reflection characteristic precisely, it is possible to change or control the characteristic of outgoing light exactly with slight deformation.

The lighting reflection apparatus according to the fifth aspect includes the reflector composed of the substrate made of aromatic polyimide and a thickness of the reflector is set in a range from 8 to 200 µm. Hence, this lighting reflection apparatus is particularly suitable for use as a lighting reflection apparatus which needs heat resistance, such as headlights of a vehicle. Also, by using a film-like reflector having a thickness in a pre-set range, it is possible to obtain a reflector which can attain not only the aforementioned characteristics including the elastic restorability, readiness in deformation, and lightness in weight, but also adequate durability over repetitive deformation.

### BRIEF DESCRIPTION OF THE DRAWINGS

These and other objects and advantages of the present invention will become clear from the following description with reference to the accompanying drawings, wherein:
Figs. 1(a) and 1(b) are explanatory views showing a lighting reflection apparatus according to one embodiment of the present invention;
Figs. 2(a) and 2(b) are explanatory views showing a lighting reflection apparatus according to another embodiment of the present invention;
Fig. 3 is an explanatory view showing a structure of a reflector in the lighting reflection apparatuses according to the respective embodiments;
Fig. 4 is an explanatory view showing an apparatus for manufacturing a substrate of the reflector in the lighting reflection apparatuses according to the respective embodiments;
Figs. 5(a) through 5(c) are explanatory views showing a molding formation for producing the reflector substrate;
Figs. 6(a) and 6(b) are explanatory views showing a lighting reflection apparatus according to still another embodiment of the present invention;
Figs. 7(a) and 7(b) are explanatory views showing a lighting reflection apparatus according to still another embodiment of the present invention;
Figs. 8(a) and 8(b) are explanatory views showing a lighting reflection apparatus according to still another embodiment of the present invention;
Fig. 9 is an explanatory view showing a concrete embodiment of the lighting reflection apparatus of the present invention;
Fig. 10 is an explanatory view showing another concrete embodiment of the lighting reflection apparatus of the present invention;
Fig. 11 is an explanatory view showing still another concrete embodiment of the lighting reflection apparatus of the present invention;
Fig. 12 is an explanatory view showing still another concrete embodiment of the lighting reflection apparatus of the present invention;
Fig. 13 is a view showing an arrangement of a control system for headlights of a vehicle adopting the present invention; and
Figs. 14(a) and 14(b) are explanatory views showing a prior art.

### DETAILED DESCRIPTION OF THE PREFERRED EMBODIMENTS

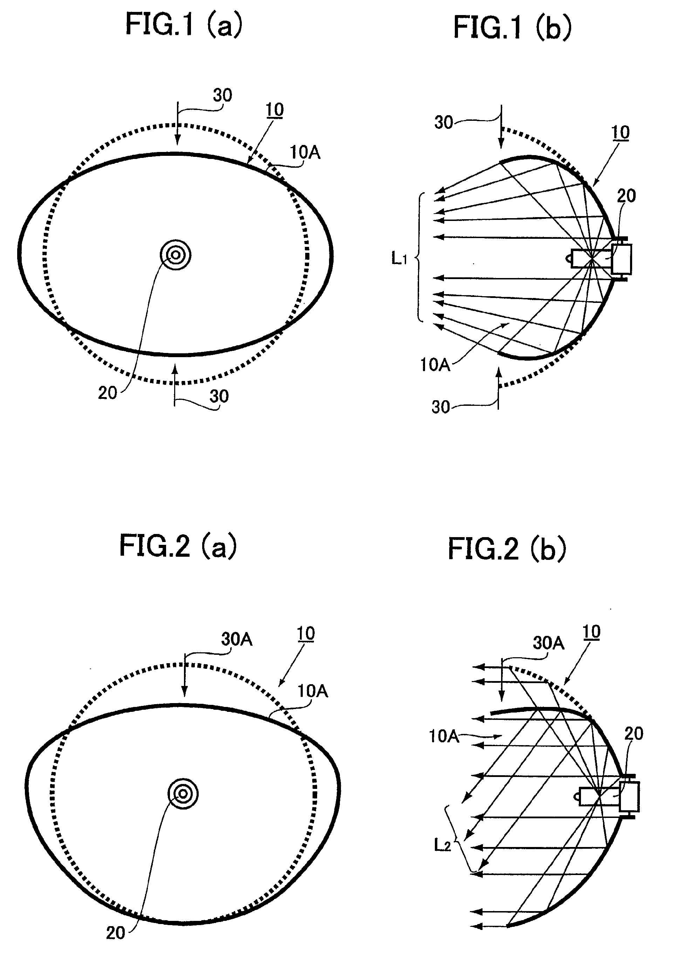

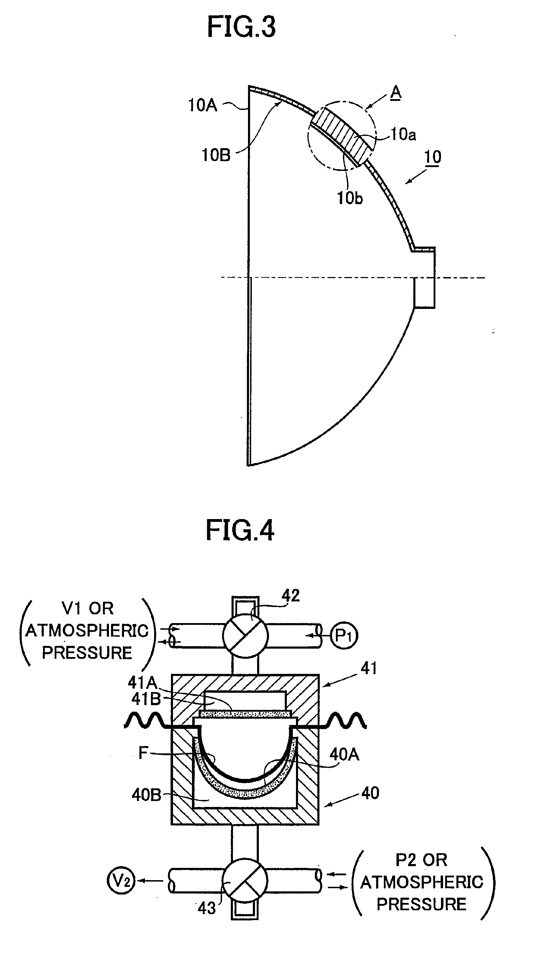

The following description will describe embodiments of the present invention with reference to the drawings. Figs. 1(a) and 1(b) and Figs. 2(a) and 2(b) are explanatory views showing lighting reflection apparatuses according to the embodiments of the present invention. A reflector 10 of each lighting reflection apparatus reflects light emitted from a light source 20 to go out through an outgoing opening 10A to a particular direction. Fig. 3 shows a structure of the reflector 10. A portion A in the drawing shows an enlarged cross section. The reflector 10 is a single substance in the form of a film, and is composed of a substrate 10a having a concave curved surface and a reflection film 10b formed on the concave curved surface . The reflection film 10b is formed by vapor depositing a metal, such as aluminum, and the reflection film 10b forms a reflection surface 10B on the inner surface of the reflector 10.

The substrate 10a is a film member shaped by curve formation according to a manufacturing method described below, and is made of a polyimide film having in itself a power of holding a three-dimensional shape independently or in the form of a single layer. A polyimide film used suitably herein includes a film of polyimide with high heat resistance, in particular, aromatic polyimide derived from aromatic tetracarboxylic acids and aromatic diamines. When used as a reflector substrate for headlights of a vehicle, in particular, a polyimide film adopted as the substrate 10a needs to have a characteristic that it will not undergo plastic deformation at or above 200°C, preferably at or above 220°C, and more preferably at or above 230°C. Also, a thickness thereof is set in a range from 8 to 200 µm, which makes it possible to attain satisfactory durability together with various characteristics described below.

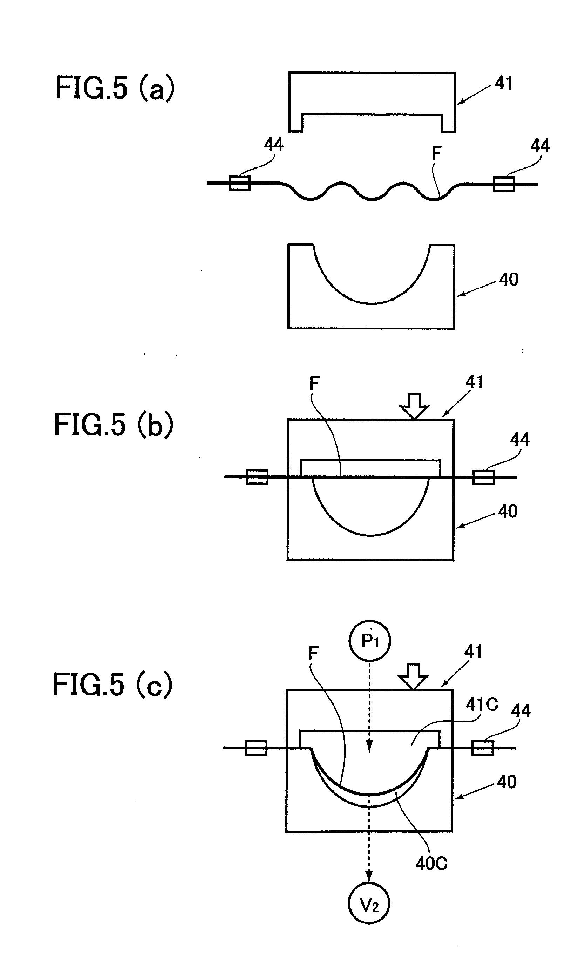

The following description will describe a method of forming the substrate 10a of the reflector 10 with reference to Fig. 4 and Figs. 5(a) through 5(c). Fig. 4 is a view showing one example of an apparatus for manufacturing the substrate 10a. In the drawing, a molding die 40 is placed as a bottom force and a die 41 is placed as a top force. Porous metals 40A and 41A are provided on the inner side of the molding die 40 and the die 41, respectively. A back side 41B of the porous metal 41A is connected to a three-way switching valve 42, which is switched so that the back portion 41B can be supplied with an applied pressure P1 and a vacuum pressure V1 or an atmospheric pressure alternately. A back side 40B of the porous metal 40A is connected to a three-way switching valve 43, which is switched so that the back portion 40B can be supplied with an applied pressure P2 or an atmospheric pressure and a vacuum pressure V2 alternately. Herein, each of the applied pressures P1 and P2 and the vacuum pressures V1 and V2 is set to be equal to or less than a die clamping pressure between the dies. In the drawing, a capital F indicates a polyimide film sandwiched between the dies.

The following description will describe a molding formation process for forming the substrate 10a using the apparatus arranged as above with reference to Figs. 5(a) through 5(c). At first, as shown in Fig. 5(a), the polyimide film F is put through film feeders 44, and fed into a space between the die 41 and the molding die 40 while non-contact heating is started with radiation heat from a heating unit (not shown) enclosed in each die. Then, as shown in Fig. 5(b), the polyimide film F is brought into a physical contact with an opening end of the molding die 40 while being sandwiched between the two dies.

Under these conditions, the three-way switching valve 42 is switched in such a manner that an atmospheric pressure or the vacuum pressure V1 is introduced into a space 41C between the die 41 and the polyimide film F through the porous metal 41A (not shown in Figs. 5(a) through 5(c)). On the other hand, the three-way switching valve 43 is switched in such a manner that an atmospheric pressure or the applied pressure P2 is introduced into a space 40C between the molding die 40 and the polyimide film F through the porous metal 40A (not shown in Figs. 5(a) through 5(c)). Then, under these conditions, the polyimide film F is subjected to further non-contact heating within the two dies.

Subsequently, as shown in Fig. 5(c), the three-way switching valves 42 and 43 are switched in such a manner that the space 41C is applied with the applied pressure P1 whereas the space 40C is opened to an atmospheric pressure while the non-contact heating is continued, whereby the polyimide film F is deformed curvedly onthemoldingdie40 with the applied pressure P1 alone. Further, the three-way switching valve 43 is switched in such a manner that the vacuum pressure V2 is introduced into the space 40C. In this manner, curve formation of the polyimide film F is performed using only a difference between pressures applied to the respective surfaces of the film while the polyimide film F is subjected to plasticization by continuing the non-contact heating.

Since the substrate 10a formed in this manner is molded without having any physical contact to the dies, neither fine irregularities on the dies are transferred, nor it will have a scratch caused by rubbing against the dies. Consequently, an extremely smooth curved surface can be formed, and by forming a reflection surface through vapor deposition of a metal on the curved surface thus formed, it is possible to form a reflector with high directivity which causes no scattering of reflection light.

The reflector 10 composed of the substrate 10a made of the polyimide film F formed in the above manner excels not only in the heat resistance, the self-digesting property, and the lightness in weight, but also in the kinetic property. In other words, the reflector 10 can readily undergo elastic deformation which results in displacement of considerable magnitude with a slight force and has a high elastic restorability.

A lighting reflection apparatus of the present invention uses the reflector 10 having the foregoing characteristics as a lighting reflector, and changes or controls the characteristics of outgoing light by causing elastic deformation therein. The following description will describe several embodiments with reference to Figs. 1(a) and 1(b), Figs. 2(a) and 2(b), and Figs. 6 through 8.

According to the embodiment shown in Figs. 1(a) and 1(b), pressing means 30 applies a pressing force to the reflector 10 of the lighting reflection apparatus from above and beneath as indicated by arrows, and as shown in Fig. 1(a), causes an elastic deformation which changes a circular outgoing opening 10A (dotted line) of the reflector 10 to a landscape circular outgoing opening 10A (Fig. 1(a) is a front view, and Fig. 1(b) is a partially cross sectional view) . According to this arrangement, as shown in Fig. 1(b), while elastic deformation is being caused, an outgoing direction of outgoing light L1 is changed by the reflection surface and the shape of the outgoing opening 10A both being deformed, and light distribution in the vertical direction is concentrated to nearly the center while light distribution in the horizontal direction is expanded laterally. Consequently, when the present embodiment is used as headlights of a vehicle, it can be applied to a case when a lighting range is enlarged at the switching from a driving at a normal speed to a driving at a high speed or when the vehicle is turning around.

According to the embodiment shown in Figs. 2(a) and 2(b), pressing means 30A applies a pressing force only to the upper side of the reflector 10 of the lighting reflection apparatus as indicated by an arrow, and as shown in Fig. 2(a), causes downward elastic deformation in the upper portion of the reflector 10 (Fig. 2(a) is a front view and Fig. 2(b) is a partially cross sectional view) . According to this arrangement, as shown in Fig. 2(b), an outgoing direction of a portion L2 of the outgoing light is changed downward, which makes it possible to change an irradiation range downward. Consequently, when the present embodiment is used as headlights of a vehicle, it can be applied to a switching from a high beam to a low beam.

The embodiments of Figs. 1(a) and 1(b) and Figs. 2(a) and 2(b) cause elastic deformation in the entire reflector 10. Hence, processing, such as folding or cutting, is not necessarily required when used as a reflector in a lighting reflection apparatus furnished with an out going light controlling function, which offers an appreciable advantage in terms of productivity over the prior art in which a reflector made of a metal material is processed to form slits or the like.

Also, the shape of the outgoing opening and the curved state of the reflection surface of the entire reflector can be changed by a simple manipulation to apply a pressing force to one or two places of the reflector. Hence, enlargement and reduction of the irradiation range and a change of the irradiation range in a particular direction as described above can be achieved by merely adding a simple manipulation mechanism.

The embodiments of Figs. 1(a) and 1(b) and Figs. 2(a) and 2(b) show cases where a pressing force is applied in the vertical direction. It should be appreciated, however, that the outgoing light characteristic of lighting light can be changed or controlled by applying a pressing force in the horizontal direction to cause elastic deformation in the reflector to change the shape of the outgoing opening and the curved state of the reflection surface.

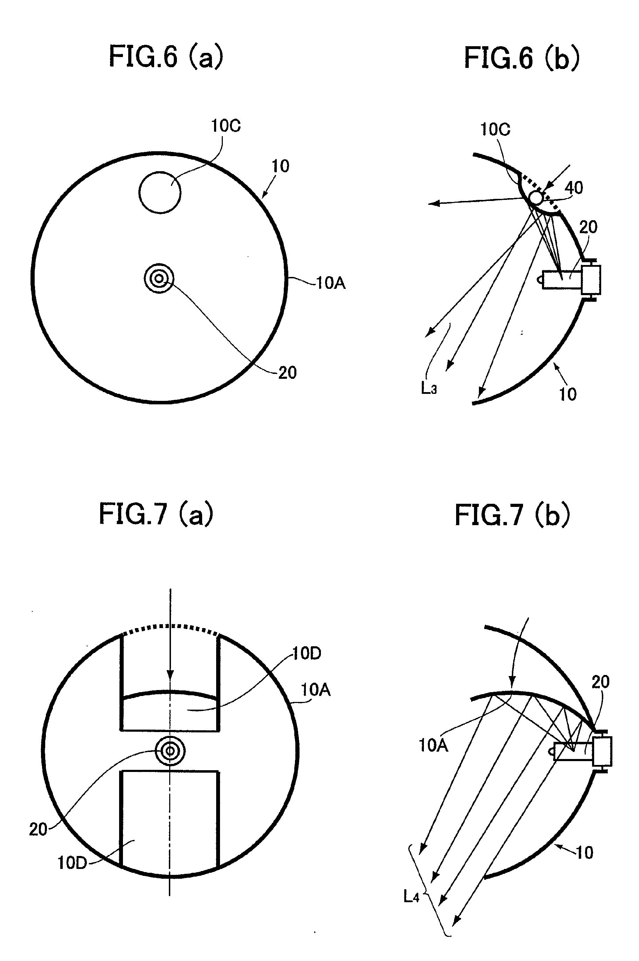

Another embodiment shown in Figs. 6(a) and 6(b) is provided with pressing means 40 for causing partial elastic deformation in the reflector 10 (Fig. 6(a) is a front view and Fig. 6(b) is a partially cross sectional view) . The pressing means 40 presses the reflector 10 from its back surface, and forms a local convex curved surface 10C on the reflection surface. According to this arrangement, a direction of outgoing light is changed locally as indicated by L3 by the convex curved surface 10C formed as the result of elastic deformation by pressing. A range of the convex curved surface 10C can be set arbitrarily by varying the magnitude of a pressing displacement which the pressing means 40 causes or by changing the size of a pressing member. Also, it is possible to change light distribution of the entire outgoing light arbitrarily by providing more than one pressing means 40 for one reflector 10.

According to a still another embodiment shown in Figs. 7(a) and 7(b), an elastic deformation potion 10D formed by a folding portion and a cut portion is provided to at least a part of the reflector 10 (Fig. 7(a) is a front view and Fig. 7(b) is a partially cross sectional view) . By applying a pressing force as indicated by an arrow from the back surface of the elastic deformation portion 10D, it is possible to obtain outgoing light L4 whose outgoing direction is changed partially. According to this arrangement, it is possible to change a lighting range and light distribution continuously. In the case of the present embodiment, the cutting processing or folding processing is necessary as is with the prior art; however, compared with the conventional metal reflector, it is quite easy to perform the foregoing processing with the reflector 10 having a polyimide film as the substrate.

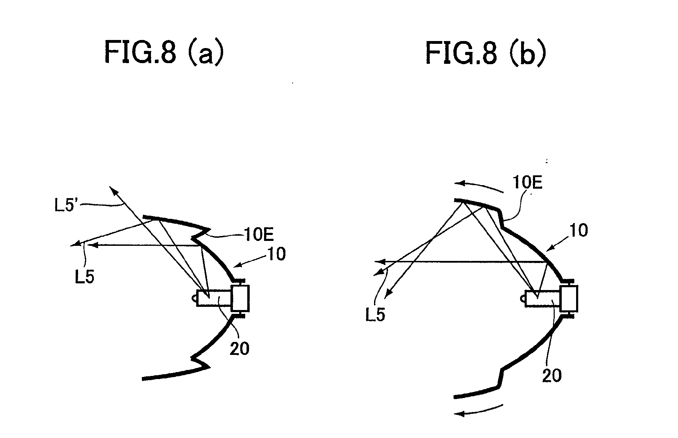

According to still another embodiment shown in Figs. 8(a) and 8(b), the reflector 10 is provided with a folding portion 10E, which is stretched when elastic deformation is caused (Fig. 8(a) is an explanatory view when no deformation is caused and Fig. 8 (b) is an explanatory view when deformation is being caused). The reflector 10 having the folding portion 10E is a reflector (Fig. 8(a)) capable of maintaining a folding state in the absence of an external applied force, which is formed by applying refraction bending treatment while applying heat treatment again to the substrate 10a after it is shaped by curve formation in the aforementioned forming process.

In the state shown in Fig. 8(a), a covering ratio of the reflector 10 with respect to the light source 20 is small, and therefore, outgoing light L5' which is not reflected by the reflector 10 is more than outgoing light L5 which is reflected by the reflector 10, which results in rather extensive light distribution. On the contrary, in the state where the folding portion 10E is stretched by applying an external force (Fig. 8(b)), most of the outgoing light is the outgoing light L5 which is reflected by the reflector 10, which results in light distribution concentrated to nearly the center. Hence, by switching these states, it is possible to control light distribution.

An operation common in the embodiments above is that the reflector 10 has a highly smooth reflection surface 10B because the substrate 10a of the reflector 10 is shaped by curve formation using only a difference between pressures applied to the respective surfaces of the film while the film is subjected to plasticization with non-contact heating in the aforementioned forming process. As a consequence, the outgoing light characteristic of irradiated light can be changed or controlled with high sensitivity when elastic deformation is caused on the reflection surface 10B. In other words, the light reflection characteristic with less scattering of reflection light can be obtained from the highly smooth reflection surface 10B having no fine irregularities, and influence when such a reflection surface is deformed appears noticeably as a difference in the outgoing direction of reflection light depending on a degree of deformation. Hence, by changing a degree of deformation of the reflector 10 or a pattern of deformation, it is possible to change or control the outgoing light characteristic of the lighting reflection apparatus in diversified manners to meet the demands . It should be noted that this diversity of deformation can be achieved by forming the reflector substrate 10a from a highly flexible polyimide film.

Another operation is based on the kinetic property of the reflector substrate 10a, that is, it is possible to achieve excellent controllability, in particular, quickness in response, when elastic deformation is caused in the reflector by using a polyimide film with high elastic restorability which can undergo considerable elastic deformation with a slight operation force.

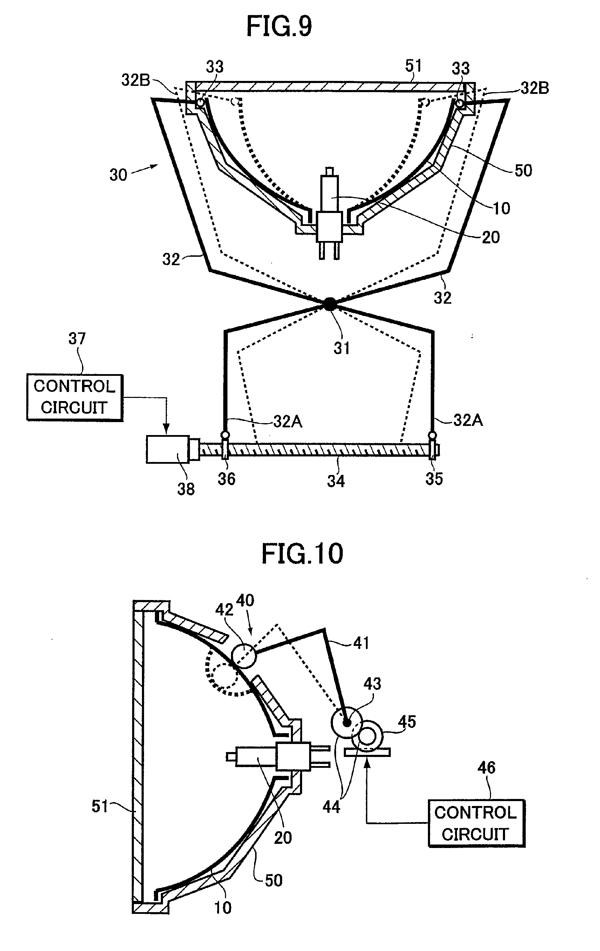

The following description will describe more concrete embodiments of the lighting reflection apparatus of the present invention with reference to Figs. 9 through 12.

A lighting reflection apparatus of Fig. 9 includes the reflector 10 within a frame 50, the light source 20 provided in the center hole of the reflector 10, a lens 51 provided in front of the outgoing opening of the reflector 10, and the pressing means 30 for causing elastic deformation in the reflector 10. To be more specific about the pressing means 30, it is provided with a tool 32 composed of a pair of members axially supported by a supporting axis 31, wherein two pressing members 33 provided at two operation ends 32B are brought into close proximity to or spaced apart from each other by manipulating two actuation ends 32A to open/close, so that the two pressing members 33 press the outgoing opening of the reflector 10 from above and beneath or from right and left, thereby causing elastic deformation in the reflector 10.

Herein, the two actuation ends 32A of the tool 32 are linked to a bearing portion 35 provided at the tip of a screw axis 34 at one end, and are linked to a movable ring 36 in thread engagement with the screw axis 34 at the other end, and rotations of the screw axis 34 are controlled by a stepping motor 38 which is actuated by a signal from a control circuit 37. According to this arrangement, a pressing displacement with respect to the outgoing opening of the reflector 10 is converted and controlled in the form of an angle of rotation of the stepping motor 38.

A lighting reflection apparatus shown in Fig. 10 is, as with the counterpart shown in Fig. 9, includes the reflector 10 within the frame 50, the light source 20 provided in the center hole of the reflector 10, the lens 51 provided in front of the outgoing opening of the reflector 10, and pressing means 40 for partially pressing the back surface of the reflector 10. To be more specific about the pressing means 40, it is provided with a bent pressing bar 41 and a pressing member 42 attached to the tip thereof, wherein an actuation axis 43, to which is fixed the base end of the pressing bar 41, is axially supported, while the actuation axis 43 is linked to a stepping motor 45 via a transmission system 44, and rotations of the stepping motor 45 are controlled by a signal from a control circuit 46. According to this arrangement, a partial pressing displacement of the reflector 10 is converted and controlled in the form of an angle of rotation of the stepping motor 45.

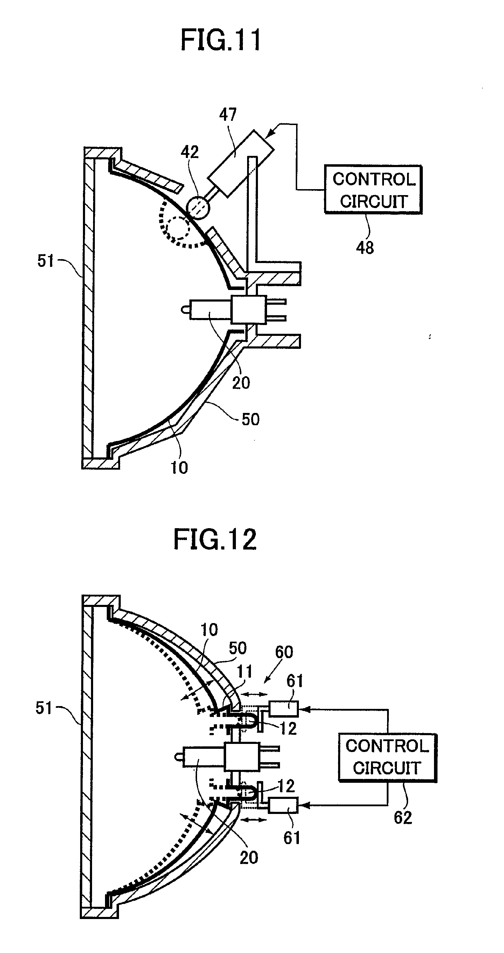

A lighting reflection apparatus shown in Fig. 11 includes, as with the counterpart of Fig. 10, the pressing means 40 for partially pressing the back surface of the reflector 10. In this case, an electromagnetic plunger 47 provided at the tip of the pressing member 42 serves as the pressing means 40, and the stroke of the electromagnetic plunger 47 is controlled by a signal from a control circuit 48.

A lighting reflection apparatus shown in Fig. 12 includes folding portions 11 in the reflector 10, and pressing means 60 for causing elastic deformation in the folding portions 11 to change the folding state thereof. The reflector 10 is provided with protrusion portions 12 connected to the folding portions 11, and the protrusion portions 12 are formed to protrude outward from the bottom surface of the frame 50. By inserting the protrusion portions 12 into the frame 50 by the pressing means 60, elastic deformation is caused in the folding portions 11 to change the folding state thereof, which causes deformation on the reflection surface of the reflector 10. The pressing means 60 is composed of electromagnetic plungers 61, and by controlling the stroke thereof by a signal from a control circuit 62, it is possible to control a quantity of insertion of the protrusion portions 12, that is, a degree of deformation on the reflection surface.

The embodiments of Figs . 9 through 12 show cases where elastic deformation is caused on the reflection surface of the reflector 10 mechanically. However, according to the present invention, the pressing means is not limited to the mechanical pressing means as described above, and actuators of various kinds driven by electrically or magnetically, by an air pressure, etc. may be adopted.

According to the lighting reflector apparatuses of the embodiments above, it is possible to cause local elastic deformation only at a portion where the pressing means has operated owing to the excellent physical properties (flexibility and elastic restorability) of the reflector 10. However, in a case where more precise light distribution is particularly desired during deformation by distinguishing a deformed portion from a non-deformed portion of the reflector 10, a structure to prevent distortion caused by stress propagation from the deformed portion may be additionally provided. In such a case, a cover plate made of resin or metal of a matching shape with the curved shape of the reflector 10 is attached to a portion which does not need deformation, or a stress absorbing shape, such a slot, may be provided between a deformed portion and a portion which does not need deformation.

The lighting reflection apparatuses according to the embodiments above can be used in a wide range of applications. A particularly effective application would be, among others, headlights of a vehicle. The headlights of a vehicle need to change or control the outgoing light characteristic of lighting light when it turns to the right or left, when the driver is trying to perceive an obstacle, when another vehicle is approaching from the opposite direction, when it is driven at a high speed, or depending on the weather, and elastic deformation is caused in the reflector 10 as needed to correspond to such a change or control.

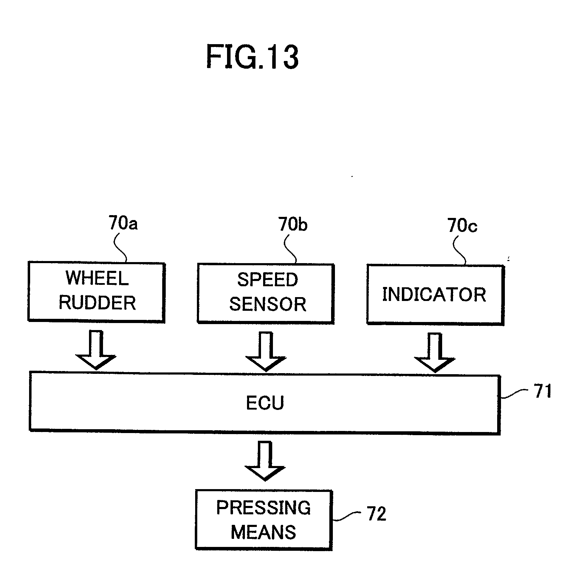

Fig. 13 is a view showing an arrangement of a system for a control apparatus for headlights of a vehicle adopting the present invention, wherein a wheel rudder signal 70a, a speed sensor signal 70b, and an indicator driving signal 70c are inputted into an ECU (Electronic Control Unit) 71 including the aforementioned control circuit, and pressing means 72 (30, 30A, 40, or 60) is controlled by a control signal from the ECU 71, whereby the outgoing light characteristic of the headlights is controlled.

Also, the lighting reflection apparatuses according to the embodiments of the present invention can be applied to various lighting apparatuses other than the headlights of a vehicle. To name a few, the present invention can be suitably applied to a light for a patrol car, a room light, an interior light and an exterior light for a vehicle; a surgery light, a dental care light for a medical use; an interior light of a gymnasium, a spot light on stage for use with a special purpose, etc. It is needless to say that the present invention is not limited to the foregoing applications, and can be suitably applied to a lighting apparatus which requires heat resistance and the ability to change and control the outgoing light characteristic with high flexibility, to change and control the outgoing light characteristic with high sensitivity, and to change and control the outgoing light characteristic with quick response.

To be more specific, the lighting reflection apparatus of the present invention can provide various functions for a wide range of applications without using any supplemental reflection component by a single reflector when it is composed of a single reflector 10 as are in the embodiments above. Also, when it is composed of more than one reflector 10 or combined with another lighting apparatus, multiple changes and control of the light distribution pattern or manipulations for a partial change in lighting intensity become possible.

According to the present invention, in a lighting reflection apparatus for changing or controlling an outgoing state of outgoing light by causing elastic deformation in a reflector, an improvement of the productivity and weight saving can be achieved by using a film reflector substrate, and a quick response can be made in changing or controlling the outgoing light characteristic by using a reflector made of a polyimide film which can readily undergo elastic deformation with high restorability. Further, since a polyimide film formed by a completely non-contact method is used as the reflector substrate, a highly smooth reflection surface can be obtained, which makes it possible to change or control the outgoing light characteristic with high sensitivity. Also, since the outgoing light characteristic is changed or controlled by deforming a highly flexible film reflector, it is possible to meet various demands for a wide range of applications in detail.

While there has been described what are at present considered to be preferred embodiments of the present invention, it will be understood that various modifications may be made thereto, and it is intended that the appended claims cover all such modifications as fall within the true spirit and scope of the invention.

## Claims

1. A lighting reflection apparatus for reflecting light emitted from a light source (20) to a particular direction, comprising:
a reflector (10) composed of a substrate (10a) made of a film-like polyimide molded item shaped by curve formation using only a difference between pressures applied to respective surfaces of a film-like item while subjecting said film-like item to plasticization with non-contact heating and having in itself a power of maintaining a three-dimensional shape independently or in a form of a single layer, and a reflection surface (10b) formed on a concave curved surface of said substrate (10a); and
pressing means (30) for causing elastic deformation on the reflection surface (10b) of said reflector (10).

2. The lighting reflection apparatus according to claim 1, wherein said pressing means (30) presses a circular outgoing opening (10A) of said reflector (10) from above and beneath or from right and left to deform said circular outgoing opening (10A) longitudinally or laterally.

3. The lighting reflection apparatus according to claim 1, wherein said pressing means (30) presses a back surface of said reflector (10) partially to form a local convex curved surface (10C) in at least one place on the reflection surface (10b).

4. Alighting reflection apparatus for reflecting light emitted from a light source (20) to a particular direction, comprising:
a reflector (10) composed of a substrate (10a) made of a film-like polyimide molded item shaped by curve formation using only a difference between pressures applied to respective surfaces of a film-like item while subjecting said film-like item to plasticization with non-contact heating and having in itself a power of maintaining a three-dimensional shape independently or in a form of a single layer, and a reflection surface (10b) formed on a concave curved surface of said substrate (10a), said reflector (10) having an elastic deformation portion (10D) in a form of one or both of a folding and a cut formed in at least a part of said reflector (10).

5. The lighting reflection apparatus according to claim 1, wherein said substrate (10a) is made of heat-resistant aromatic polyimide which does not undergo plastic deformation at or above 200°C and has a thickness ranging from 8 to 200 µm.
